# EUROPEAN PATENT SPECIFICATION

(11) **EP 2 100 943 B1**
(45) Date of publication and mention of the grant of the patent: **10.07.2013**
(21) Application number: 08152342.5
(22) Date of filing: 06.03.2008
(51) Int. Cl.: C09K 11/57, C09K 11/58, C09K 11/77

(54) **ABOS:M-based phosphors and light sources containing these phosphors**
Leuchtstoffe auf ABOS:M-Basis und Lichtquellen mit diesen Leuchtstoffen
Phosphores à base ABOS/M et sources lumineuses contenant ces phosphores

(43) Date of publication of application: 16.09.2009
(73) Proprietor: Leuchtstoffwerk Breitungen GmbH, 98597 Breitungen (DE)
(72) Inventor: Duan, Cheng-Jun, 36433 Bad Salzungen (DE); Hintzen, Hubertus Theresia, 5646 JE Eindhoven (NL); Rösler Sylke, 99817 Eisenach (DE); Starick, Detlef, 17489 Greifswald (DE)
(74) Representative: Engel, Christoph Klaus

(56) References cited:
- CN-A- 101 081 979
- YUJUAN XIA ET. AL.: "Luminescence properties of Cu-activated BaZnOS phosphor" SOLID STATE SCIENCE, vol. 9, 2007, pages 1074-1078, XP002480307 Elsevier

## Description

This invention is related to ABOS:M-based phosphors, e.g. phosphors that are based on modified CaZnOS. Furthermore, this invention is related to the use of these phosphors for converting radiation. This invention is also related to light sources that contain the inventive phosphor.

The preparation, structure and physical properties of CaZnOS and BaZnOS compounds were presented in a few publications, e. g. in:
- Petrova, S. A.; Marevich, V. P.; Zakharov, R. G.; Selivanov, E. N.; Chumarev, V. M.; Udoeva, L.Yu.: Doklady Chemistry, 2003, 393, 255;
- Sambrook. T.; Smura, C. F.; Clarke, S. J.; Shi Halasyamani, P. Inorg. Chem. 2007, 16, 2571.
- S. Broadley, Z. A.Gál, F. Corá, C. F.Smura, S. J. Clarke, Inorg. Chem. 44 (2005) 9092.

It has been shown that CaZnOS is structurally different from BaZnOS.

In Xia, Y., et al.: "Luminescence properties of Cu-activated BaZnOS phosphor" in Solid State Science, 2007, 9, 1074, a BaZnOS-based phosphor that is activated by Cu is shown.

In CN 101081979 A, BaZnOS-based phosphors that are activated by Mn and Cu are shown.

It is an object of the present invention to provide novel phosphors that show improved properties regarding the efficiency when excited by radiation in the ultraviolet or blue range and regarding a small width at half maximum.

This invention discloses phosphors as defined in claim 1.

In another embodiment the invention discloses phosphors as defined in claim 2.

Due to its non-centrosymmetric structure, CaZnOS is especially suitable for emitting a Mn-based luminescence that is very narrowband. The concentration of the activator is adjusted in the range from larger than zero up to 50 atomic percent.

Mn-activated CaZnOS shows an orange-red narrow emission band in the wavelength range 550-780 nm peaking.

In an embodiment of the invention, the phosphor shows excitation bands in the range of 200-550 nm. On the other side it could be shown that the phosphors of the invention exhibit an intensive luminescence when they are excited with cathode (CR) or X-ray radiation.

Due to the described luminescence characteristics the phosphor according to the present invention can be used as a radiation converter for the transformation of cathode or X-rays, UV, violet or blue radiation into a longer-wave visible light that will be emitted by the phosphor preferably in blue to red spectral region.

As appropriate technical device's cathode ray tubes (CRT), X-ray intensifying screens or other X-ray image converters, special laser based large screen display's, fluorescent lamps, colored light or white emitting LED's and also for example photovoltaic cells or greenhouse foils or glasses can be regarded.

As excitation sources for the inventive phosphors electron or X-ray generators, high or low-pressure discharge plasmas, UV or blue emitting organic or inorganic light emitting diodes (LED) or appropriate lasers or laser diodes, or in addition, inorganic thin or thick electroluminescent screens are used.

The inventive phosphor can be used as single component in a relevant light emitting element or in combination with other red yellow, green, and/or blue-emitting phosphors in order to improve the performance of the respective application. The latter meets for example the improvement of the color rendering indices (CRI) of fluorescent lamps and white emitting LED's.

An inventive light source comprises a first phosphor according to the invention and a second phosphor that emits red, yellow, green, and/or blue light.

The inventive phosphor can be prepared in the following way:
- careful mixing of CaO and ZnS as well as one or more activator compounds,
- subsequent firing of the mix at 900-1200°C (preferably 1000-1100°C) in an inert atmosphere (nitrogen, noble gas) or in a reduced atmosphere (H₂/N₂)
- Instead of CaO, another CaO precursor such as calcium acetate, calcium carbonate, calcium nitrate, calcium oxalate, or calcium sulfate can be used. CaO and the corresponding CaO precursor respectively, may be replaced by another alkaline earth metal oxide and the corresponding precursor respectively.
- ZnS may be partially replaced by MgS.
- MnO, manganese oxide precursors such as manganese(II) carbonate, manganese nitrate, manganese sulfate, as well as other manganese compounds such as MnS or further manganese(II) salts can be used as activator compounds.
- Melting agents, such as alkali metal halide, alkaline earth metal halide and ammonium halide can be used in order to improve crystal habit and in order to control the grain size.
- In another embodiment of the method of preparing the inventive phosphor, the phosphor is made from CaS and ZnO as well as the activator compounds according to the above procedure. CaS can be partially replaced by alkaline earth metal sulfide. ZnO can be partially replaced by MgO.
- A second method of preparing the inventive phosphor is the reaction of CaO or a corresponding precursor and ZnO as well as one of the above-mentioned activator compounds with sulfur, soda and an appropriate fluxing agent such as alkali phosphate at a temperature between 900 °C and 1200°C on air. CaO and the corresponding precursor respectively, can as described above be replaced by alkaline earth metal oxide and corresponding precursors, respectively. ZnO can be partially replaced by MgO.

The grain size of the inventive phosphor may vary in a large range. An average grain size of the phosphor can be a few nanometers. However, the grain size can be adjusted to particle sizes up to 30 µm.

In the following, preparation and photoluminescence properties of an inventive red Mn²⁺-activated CaZnOS phosphor for light emitting diodes are presented.

Polycrystalline CaZn₁₋ₓMnₓOS (0 ≤ x ≤ 0.2) powders were prepared by a solid state reaction at high temperature. The appropriate amounts of CaCO₃, ZnS and MnCO₃ powders were weighed out and subsequently mixed and ground together in an agate mortar. The powder mixtures were then transferred into molybdenum crucibles. All processes were carried out in a purified-nitrogen-filled glove-box. Subsequently those powder mixtures were fired in a horizontal tube furnace at 1000 °C for 48 h under flowing N₂ atmosphere. After firing, the samples were gradually cooled down to room temperature in the furnace. There was no apparent reaction of the prepared nitrides with the Mo crucibles.

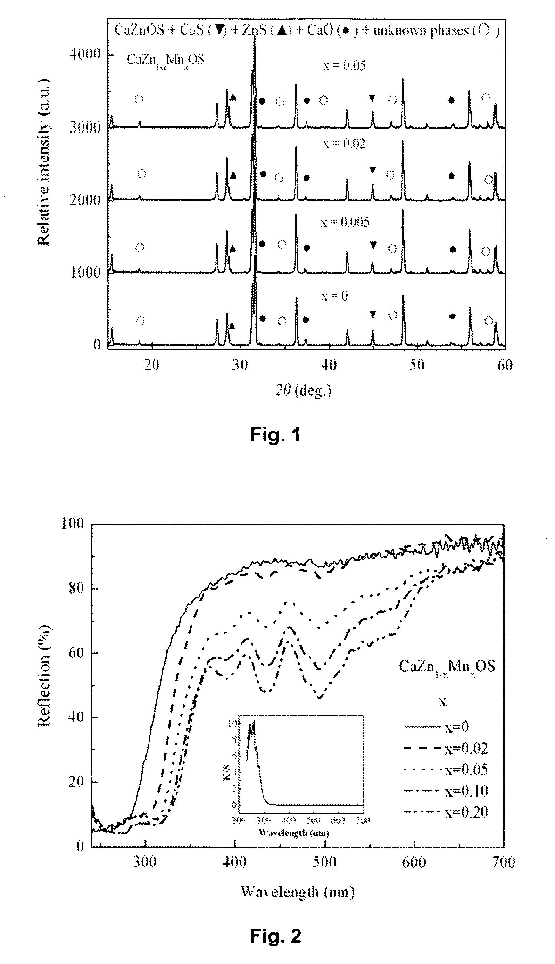

The XRD data for phase identification were collected at ambient temperature by X-ray powder diffractometer (Rigaku, D/MAX-B) with Cu Kα radiation operated at 40 kV and 30 mA with a scan speed of 0.6°/min in the 2θ range of 10-90°. The diffuse reflectance, emission and excitation spectra of the samples were measured at room temperature in air by a Perkin-Elmer LS 50B spectrophotometer equipped with a Xe flash lamp. The reflection spectra were calibrated with the reflection of black felt (reflection 3%) and white barium sulfate (BaSO₄, reflection ∼100 %) in the wavelength region of 230-700 nm. The excitation and emission slits were set at 15 nm. The emission spectra were corrected by dividing the measured emission intensity by the ratio of the observed spectrum of a calibrated W lamp and its known spectrum from 300 to 900 nm. Excitation spectra were automatically corrected for the variation in the lamp intensity (and thus for the spectral dependence of the excitation energy) by a second photomultiplier and a beam splitter. All the luminescence spectra were measured with a scan speed of 400 nm/min. Fig. 1 shows the powder XRD patterns of CaZn₁₋ₓMnₓOS (0 ≤ *x* ≤ 0.05) samples. By comparing these patterns with the calculated diffraction patterns obtained from the single crystal, the compositions of CaZn₁₋ₓMnₓOS phosphors are shown to be the main phase of CaZnOS and a small amount of impurities, i.e. CaS, ZnS, CaO and some unknown phases. Compared to the reported preparation method using a sealed tube, relatively more impurities have been detected in our samples.

Fig. 2 shows the diffuse reflection spectra of undoped and Mn²⁺-doped CaZnOS samples. Both undoped and Mn²⁺-doped samples show a strong drop in reflection in the UV range below 300 nm, corresponding to the valence-to-conduction band transitions of the CaZnOS host lattice. In order to better localize the threshold for host lattice absorption, the absorption spectrum of CaZnOS was obtained from the reflection spectra by using the Kubelka-Munk function: F(R) = (1-R)²/2R = F/S, where R, K and S are the reflection, the absorption and the scattering coefficient, respectively. The absorption spectrum of CaZnOS derived with the Kubelka-Munk function is shown in the inset of Fig. 2. The value of the optical band gap is calculated to be about 3.93 eV (i.e. 315 nm) by extrapolating the Kubelka-Munk function to K/S = 0, which is slightly larger that the previous reported value, i.e. 3.73 eV. Additionally, the absorption edge of CaZnOS:Mn²⁺ show a minor red-shift with increasing Mn²⁺ concentration (Fig. 2). It means that the orbital electrons of Zn atom played an important role in composing the bottom of the conduction band of CaZnOS. The intense reflection in the visible spectral range is in agreement with the observed white daylight color for undoped CaZnOS sample. Obviously, several narrow strong absorption bands located at 396, 438 and 490 nm also can be seen from the reflection spectra of higher Mn²⁺ concentration samples, which can be attributed to the absorption by Mn²⁺ ions due to the absence of them in undoped CaZnOS sample. As expected, the intensities of them increase for higher Mn²⁺ concentration. In contrast to the undoped sample, CaZn₁₋ₓMnₓOS show white to pink color varying with the Mn²⁺ concentration as a result of a strong absorption of the Mn²⁺ in the visible range around 350-550 nm. Because the d-d transitions of Mn²⁺ are spin and parity forbidden, the absorption bands of Mn²⁺ in CaZnOS are expected to be weak. On the contrary, Mn²⁺ shows a strong absorption in the wavelength range of 350-550 nm in CaZnOS. The high absorption caused by spin-forbidden d-d transitions of Mn²⁺ in MnSiN₂ are explained by selection rule relaxations caused by the non-centrosymmetric MnS₃O site symmetry in combination with a higher degree of bond covalency and thus a larger potential for ligand and central ion orbital mixing for Mn²⁺-S as compared to Mn²⁺-O.

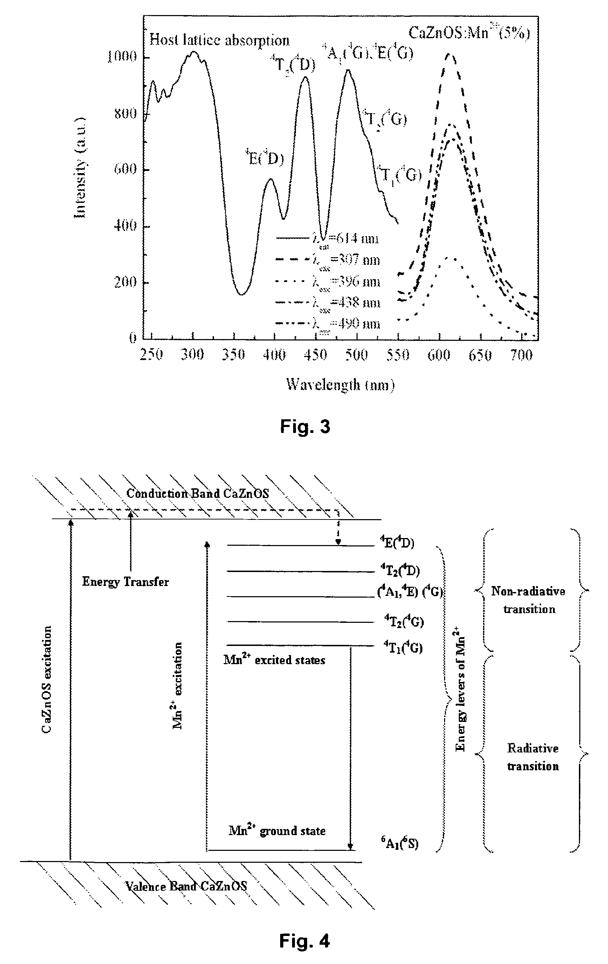

Fig. 3 shows the excitation and emission spectra of a selected CaZn₁₋ₓMnₓOS (x=0.05) phosphor. It shows a narrow symmetric emission band in the wavelength range of 550-700 nm with peak center at 614 nm irrespective of the excitation wavelength. The observed band emission is ascribed to the ⁴T₁(⁴G) → ⁶A₁(⁶S) transition of Mn²⁺ in CaZnOS host lattice. In the CaZnOS:Mn²⁺ phosphor system, Mn²⁺ ions are expected to occupy the Zn²⁺ lattice sites (Mn_{Zn}) due to similar ionic size (The ionic radii of Mn²⁺ and Zn²⁺ are 0.80 Å and 0.74 Å, respectively.) In the crystal structure of CaZnOS, there is only single crystallographic site for Zn and each Zn atom is coordinated with three S atoms and an O atom. Therefore, there is only single crystallographic site for Mn²⁺ in CaZnOS:Mn²⁺ phosphor, which is in good agreement with the observance of the single symmetric emission band of Mn²⁺ in CaZnOS host lattice. The half-width for this single narrow emission band is about 50 nm, which resembles with the literature values, e.g. about 63 nm for ZnS, 60 nm for Ba₂ZnS₃:Mn²⁺ and 40 nm for Zn₂SiO₄:Mn²⁺. The excitation spectrum of CaZnOS:Mn²⁺ extends a broad range of wavelengths (230-550 nm) and is consistent with the diffuse reflectance spectra. Definitely, the short strong excitation bands below 350 nm originate from host lattice excitation as can be concluded from the comparison with the reflection spectrum. The appearance of the host lattice excitation bands in the excitation spectrum of Mn²⁺ indicates that there exists efficient energy transfer from the host lattice of CaZnOS to Mn²⁺ ions. The remaining excitation bands in the wavelength range of 350-550 nm can be assigned to the transitions of Mn²⁺ from ground state ⁶A₁(⁶S) to ⁴E(⁴_{D}), ⁴T₂ (⁴_{D}), [⁴A₁(⁴G), ⁴E(⁴G)], ⁴T₂(⁴G) and ⁴T₁(⁴G) levels, respectively, as illustrated in Fig. 3. The energy level scheme and the main mechanisms involved in the generation of Mn²⁺ emission in CaZnOS are shown in Fig. 4. The typical band emission of Mn²⁺ in CaZnOS host lattice can be realized in two different ways. The first way is to excite the Mn²⁺ ion directly in its own excitation levels. The electron from the ground state of Mn²⁺ is excited into the higher energy levels of Mn²⁺. The excited free electron then relaxes to the ⁴T₁(⁴G) excited state through ⁴E(⁴D), ⁴T₂(⁴D), (⁴A₁,⁴E) (⁴G), ⁴T₂(⁴G) and intermediate energy levels of Mn²⁺ by a non-radiative process, followed by a radiative transition from the ⁴T₁(⁴G) excited state to the ⁶A₁(⁶S) ground state giving rise the red emission of Mn²⁺ in CaZnOS host lattice. The second option is to excite host lattice, followed by efficient energy transfer from the host lattice to the Mn²⁺ ion, which also results in the typical emission of Mn²⁺.

Table 1 summarizes the characteristics of CaZnOS: Mn²⁺ phosphors and compares it with some other typical Mn²⁺-doped phosphors. From the comparison, we can see that Mn²⁺-doped phosphors usually can only be efficiently excited under host lattice excitation due to the d-d transitions of Mn²⁺ are spin-forbidden, such as Zn₂SiO₄:Mn²⁺, Ba₂ZnS₃:Mn²⁺ and ZnS:Mn²⁺. However, as for CaZnOS:Mn²⁺, it can be efficiently excited not only under host lattice but also under typical Mn²⁺ excitation bands. As for the compounds of CaZnOS and BaZnOS, Mn²⁺ shows a different luminescence property in these two compounds, which can be ascribed to the different crystal structure and different coordination environment for Zn in these two compounds. In the crystal structure of BaZnOS, each Zn is coordinated with two S atoms and two oxygen atoms, while each Zn is coordinated with three S atoms and an O atom in CaZnOS.

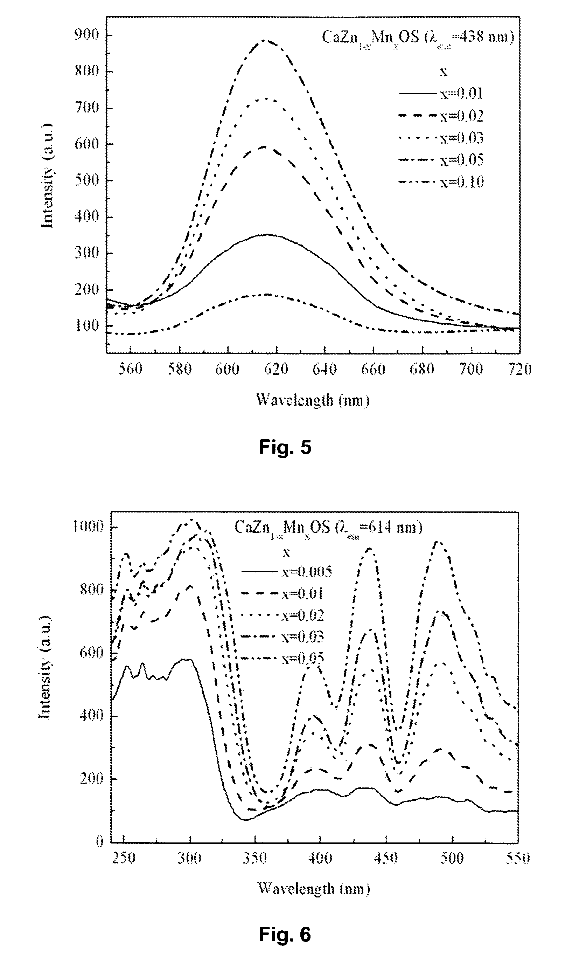

Fig. 5 shows the emission spectra of CaZn₁₋ₓMnₓOS: Mn²⁺ phosphors as a function of Mn²⁺ concentration under an excitation wavelength of 438 nm. The position of the emission band of Mn²⁺ in CaZnOS host lattice is independent of Mn²⁺ doping concentration. The highest emission intensity is observed for the material doped with 5 mol % Mn²⁺ (i.e., x = 0.05). The emission intensity declines intensively as the concentration of Mn²⁺ exceeds 5 mol % due to concentration quenching.

Fig. 6 shows the excitation spectra of CaZnOS:Mn²⁺ phosphors with different Mn²⁺ doping concentrations. The shape and position of these excitation bands (host lattice excitation bands and Mn²⁺ excitation bands) are almost independent of the Mn²⁺ doping concentrations except for a minor shift in the peak center of host lattice excitation bands. It shows a minor red-shift with increasing Mn²⁺ concentration, which is in good agreement with the observance of a minor red-shift for the absorption edge of CaZnOS:Mn²⁺ phosphors with increasing Mn²⁺ concentration in their reflection spectra. In addition, as expected, the ration between the intensities of them (Mn²⁺ excitation bands/host lattice excitation bands) has been increasing with increasing Mn²⁺ concentration.

In summary, the Mn²⁺-activated CaZnOS phosphor shows a single symmetric narrow emission band in the wavelength range of 550-750 nm with peak center at about 614 nm with a half-width of about 50 nm. The high absorption and strong excitation bands of CaZn₁₋ₓMnₓOS in the wavelength range of 350 - 550 m are very favorable properties for application as LED conversion phosphors.

In the following, preparation and photoluminescence properties of a Mn²⁺-activated BaZnOS phosphor not according to the invention are presented.

Polycrystalline BaZn₁₋ₓMnₓOS (0 ≤ x ≤ 0.1) powders were prepared by a solid state reaction at high temperature. The appropriate amounts of BaS, ZnO and MnCO₃ powders were weighed out and subsequently mixed and ground together in an agate mortar. The powder mixtures were then transferred into molybdenum crucibles. All processes were carried out in a purified-nitrogen-filled glove-box. Subsequently those powder mixtures were fired in a horizontal tube furnace at 920 °C for 24 h under flowing N₂ atmosphere. After firing, the samples were gradually cooled down to room temperature in the furnace. There was no apparent reaction of the prepared oxysulfide with the Mo crucibles.

All measurements were performed on finely ground samples, which were analyzed by X-ray powder diffraction (Rigaku, D/MAX-B) using Cu Kα radiation operated at 40 kV and 30 mA with a graphite monochromator. The phase formation is checked by the normal scan speed (0.6°/min) in the 2θ range of 10-90°. The XRD measurements were performed at room temperature in air.

The emission and excitation spectra of the samples were measured at room temperature in air by a Perkin-Elmer LS 50B spectrophotometer equipped with a Xe flash lamp. The excitation and emission slits were set at 15 nm. The emission spectra were corrected by dividing the measured emission intensity by the ratio of the observed spectrum of a calibrated W lamp and its known spectrum from 300 to 900 nm. Excitation spectra were automatically corrected for the variation in the lamp intensity (and thus for the spectral dependence of the excitation energy) by a second photomultiplier and a beam splitter. All the luminescence spectra were measured with a scan speed of 400 nm / min.

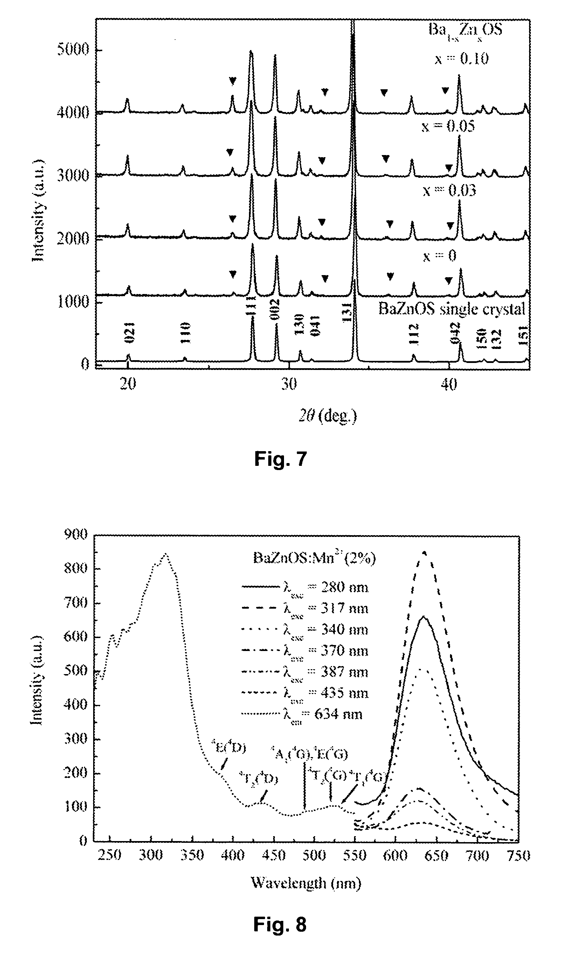

Fig. 7 shows the powder XRD patterns of BaZn₁₋ₓMnₓOS (0 ≤ x ≤ 0.10) samples. By comparing these patterns with the calculated diffraction patterns obtained from the single crystal, CaZn₁₋ₓMnₓOS was formed as a nearly single phase with only a trace of unknown secondary phase. All the peaks except for the ones ascribed to the unknown phases can be indexed to an orthorhombic structure with a space group of *Cmcm*. The calculated values of the lattice constants (*a* = 3.9760 Å, *b* = 12.8763 Å, *c* = 6.13081 Å for x = 0.05) match with reported values for undoped sample (*a* = 3.96192 Å, *b* = 12.88541 Å and *c* = 6.111754 Å). The calculated lattice constants for BaZn_{0.95}Zn_{0.05}OS are slightly larger than those of undoped BaZnOS sample, which can be ascribed to the fact that the ionic radius of Mn²⁺ (0.80 Å) is larger than that of Zn²⁺ (0.74 Å) resulting in an expanding host lattice with the incorporation of Mn²⁺. This is also in good agreement with the blue shift of the position of XRD peaks with increasing Mn²⁺ concentration.

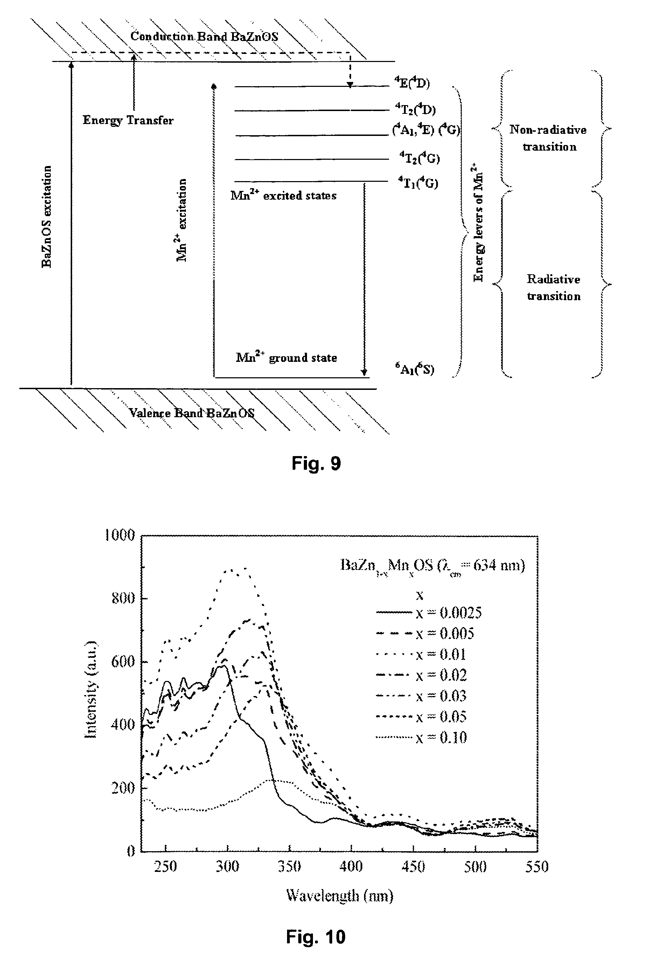

Fig. 8 shows the excitation and emission spectra of a selected BaZn₁₋ₓMnₓOS (x=0.02) phosphor. It shows a narrow symmetric emission band in the wavelength range of 550-700 nm with peak center at about 634 nm irrespective of the excitation wavelength. The observed band emission is ascribed to the ⁴T₁(⁴G) → ⁶A₁(⁶S) transition of Mn²⁺ in BaZnOS host lattice. In the BaZnOS:Mn²⁺ phosphor system, Mn²⁺ ions are expected to occupy the Zn²⁺ lattice sites (Mn_{Zn}) due to similar ionic size (The ionic radii of Mn²⁺ and Zn²⁺ are 0.80 Å and 0.74 Å, respectively.) In the crystal structure of BaZnOS, there is only single crystallographic site for Zn and each Zn atom is coordinated with two S atoms and two O atoms. Therefore, there is only single crystallographic site for Mn²⁺ in BaZnOS:Mn²⁺ phosphor, which is in good agreement with the observance of the single symmetric narrow emission band for Mn²⁺ in BaZnOS host lattice. The half-width for this single narrow emission band is about 60 nm, which resembles with the literature values, e.g. about 63 nm for ZnS, 60 nm for Ba₂ZnS₃:Mn²⁺ and 40 nm for Zn₂SiO₄:Mn²⁺. The excitation spectrum of BaZnOS:Mn²⁺ extends a broad range of wavelengths (230-550 nm). Definitely, the short strong excitation bands below 375 nm originate from host lattice excitation, which also have been observed in excitation spectrum of BaZnOS:Cu²⁺ phosphors and the absorption spectrum of undoped BaZnOS sample. The appearance of the strong host lattice excitation bands in the excitation spectrum of Mn²⁺ indicates that there exists efficient energy transfer from the BaZnOS host lattice to Mn²⁺ ions. The remaining weak excitation bands in the wavelength range of 370-550 nm can be assigned to the transitions of Mn²⁺ from ground state ⁶A₁(⁶S) to ⁴E(⁴D), ⁴T₂ (⁴D), [⁴A₁(⁴G), ⁴E(⁴G)], ⁴T₂(⁴G) and ⁴T₁(⁴G) levels, respectively, as illustrated in Fig. 9. The intensities of these bands are very weak because the corresponding transitions are spin-forbidden. The energy level scheme and the main mechanisms involved in the generation of Mn²⁺ emission in BaZnOS are shown in Fig. 9. The typical band emission of Mn²⁺ in BaZnOS host lattice can be realized in two different ways. The first way is to excite the Mn²⁺ ion directly in its own excitation levels. The electron from the ground state of Mn²⁺ is excited into the higher energy levels of Mn²⁺. The excited free electron then relaxes to the ⁴T₁(⁴G) excited state through ⁴E(⁴D), ⁴T₂(⁴D), (⁴A₁,⁴E)(⁴G) and ⁴T₂(⁴G) intermediate energy levels of Mn²⁺ by a non-radiative process, followed by a radiative transition from the ⁴T₁(⁴G) excited state to the ⁶A₁(⁶S) ground state giving rise the red emission of Mn²⁺ in BaZnOS host lattice. The d-d transitions of Mn²⁺ are spin-forbidden, so their transitions are difficult to pump and emission intensity is very weak, which is indeed experimentally observed (Fig. 8). The second option is to excite host lattice, followed by efficient energy transfer from the host lattice to the Mn²⁺ ion, which also results in the typical emission of Mn²⁺ (Fig. 8). Due to efficient energy transfer between the host lattice (BaZnOS) and activator (Mn²⁺), Mn²⁺ can be efficiently excited under the host lattice excitation.

Fig. 10 shows the excitation spectra of BaZnOS:Mn²⁺ phosphors with different Mn²⁺ doping concentrations. The shape and position of the weak Mn²⁺ excitation bands are independent of the Mn²⁺ doping concentration, while Mn²⁺ concentration showed a great influence on the position and intensity of the host lattice excitation bands. The peak center of the host lattice excitation bands of BaZn₁₋ₓMnₓOS (0 < x ≤ 0.10) phosphors shifted to longer-wavelength range from 295 to 340 nm, corresponding to the decrease in the optical band gap, with increasing Mn²⁺ concentration. According to the electronic structure calculation results, the bottom of the conduction bands and the top of the valence bands of BaZnOS are dominated by a highly dispersive Zn 4s and S 3p levels, respectively. Accordingly, the corresponding optical band gap of BaZnOS is ascribed to a transition between S 3p and Zn 4s energy levels. However, this band gap decreased with the incorporation of Mn²⁺ into BaZnOS host lattice. The possible explanation for the red-shift of the band gap of BaZn₁₋ₓMnₓOS phosphors with increasing Mn concentration is ascribed to the spin-exchange interaction between the *sp* band and localized spins of the transition-metal ions. The exchange interaction between the transition-metal ions and the band electrons (the so-called s-d and p-d interactions) gives rise to a negative and a positive correction to the energy of the conduction and valence bands, respectively, and lead to decreasing of the band gap. Furthermore, the increase of the lattice constants due to the larger Mn²⁺ ions into the host lattice might also contribute to the red-shift of the band gap of BaZn₁₋ₓMnₓOS (0 ≤ x ≤ 0.10) phosphors. An expanding host lattice will lead to the decrease of the crystal (ligand) field strength, while the decrease of the crystal field strength will reduce the overlap between the orbitals of the neighboring atoms. As a consequence the splitting of the orbitals will decrease. Therefore, the dispersion of the bands will decrease, but probably also the distance between the bands. Although the host excitation is independent of the luminescent centre, the concentration of Mn²⁺ affects its excitation intensity intensely. In this phosphor, the maximum excitation intensity is obtained for the material doped with 1 mol % Mn²⁺ (i.e., x = 0.01).

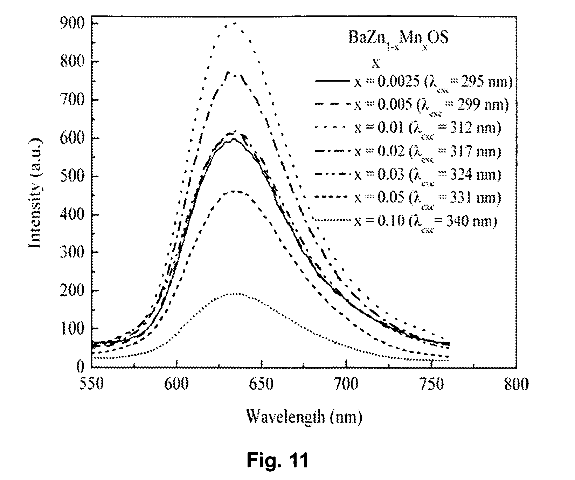

Fig. 11 shows the emission spectra of BaZn₁₋ₓMnₓOS: Mn²⁺ phosphors as a function of Mn²⁺ concentration. The position of the emission band of Mn²⁺ in BaZnOS host lattice is independent of Mn²⁺ doping concentration. The highest emission intensity is observed for the material doped with 1 mol % Mn²⁺ (i.e., x = 0.01). The emission intensity declines intensively as the concentration of Mn²⁺ exceeds 1 mol % due to concentration quenching.

Finally, it is interesting to note that the Mn²⁺-activated BaZnOS phosphors not according to the invention not only show strong absorption in the wavelength range of 230- 400 nm because of the host lattice absorption, but also that the host lattice can efficiently transfer the absorbed energy to Mn²⁺ ions resulting in the typical red emission of Mn²⁺ ions. Thus BaZnOS:Mn²⁺ might be used as red-emitting phosphor for UV light-emitting diode and displays devices.

The red color emitting BaZn₁₋ₓMnₓOS (0 < x ≤ 0.10) phosphors were successfully synthesized by a sold state reaction at high temperature. An efficient red emission with peak center at about 634 nm occurs under the host lattice excitation in the wavelength range of 230-400 nm due to the efficient energy transfer between the BaZnOS host lattice and Mn²⁺. Moreover, the peak center of the host lattice excitation bands (230- 400 nm) shifted to longer-wavelength from 295 to 340 nm, corresponding to the decrease in the optical band gap, with increasing Mn²⁺ concentration, which can be ascribed to the exchange interaction between the transition-metal ions and the band electrons (the so-called s-d and p-d interactions) and an expanding host lattice with the incorporation of the larger Mn²⁺ ions into BaZnOS host lattice. The maximum red emission intensity was obtained for the material doped with 1mol % Mn²⁺. In addition, it is worth noting that BaZnOS:Mn²⁺ phosphors might be used as red-emitting phosphor for UV light-emitting diode and displays devices.

**Table 1:**

| phosphors | Zn₂SiO₄: Mn²⁺ | Ba₂ZnS₃:Mn²⁺ | ZnS:Mn²⁺ | BaZn₁₋ₓMnₓOS (0≤x≤0.2) | CaZn₁₋ₓMnₓOS (0≤x≤0.2) |
|---|---|---|---|---|---|
| crystal system | R ⁻ , 3H | Pnam | P6₃mc | Cmcm | P6₃mc |
| body color | gray-white | gray-white | gray-white | light orange to pink | white to pink |
| host lattice excitation bands (nm) | 175, 250 (strong | 360 (strong) | 332 (strong) | 295-340 (strong) | 290-310 (strong) |
| Mn²⁺ excitation bands (nm) | - | 410, 510 (very weak) | - | 396, 438,490 (very weak) | 396,438,490 (strong) |
| emission peak center (nm) | 520 | 625 | 585 | 632 | 614 |
| Full width at half maximum broadband (nm) | 40 | 60-70 | 63 | 60 | 50 |
| reference | 8 | 16-18 | 1 | not according to the invention | this invention |

## Claims

1. A phosphor having the general formula:
ABOS:M, where
- A is Ca;
- B is Zn; and
- M is Mn²⁺.

2. A phosphor, having the general formula:
CaZnOS:M, where
- Ca is partially replaced by Mg, Sr, and/or Ba; and/or
- Zn is partially replaced by Mg; and
- M is Mn²⁺.

3. The phosphor according claim 1 or 2, wherein M is adjusted in the range from larger than zero up to 50 atomic percent.

## Patentansprüche

1. Leuchtstoff, welcher die allgemeine Formel aufweist:
ABOS:M, wobei
- A ist Ca;
- B ist Zn; und
- M ist Mn²⁺.

2. Leuchtstoff, welcher die allgemeine Formel aufweist:
CaZnOS:M, wobei
- Ca teilweise ersetzt ist durch Mg, Sr, und/oder Ba; und/oder
- Zn teilweise ersetzt ist durch Mg; und
- M ist Mn²⁺.

3. Leuchtstoff gemäß Anspruch 1 oder 2, wobei M in einem Bereich von größer als Null bis 50 Atom-Prozent eingestellt ist.

## Revendications

1. Phosphore répondant à la formule générale :
ABOS:M, dans laquelle
- A est Ca ;
- B est Zn ; et
- M est Mn²⁺.

2. Phosphore répondant à la formule générale :
CaZnOS:M, dans laquelle
- Ca est partiellement remplacé par Mg, Sr et/ou Ba ; et/ou
- Zn est partiellement remplacé par Mg ; et
- M est Mn²⁺.

3. Phosphore selon la revendication 1 ou 2, dans lequel M est ajusté dans la plage allant de plus de 0 à 50 % atomique.
